(19) Europäisches Patentamt
European Patent Office
Office européen des brevets

(11) Numéro de publication: **0 005 394**
**B1**

# (12) FASCICULE DE BREVET EUROPEEN

(45) Date de publication du fascicule du brevet: **11.01.84**

(51) Int. Cl.³: **C 08 F 10/00**, C 08 F 4/62

(21) Numéro de dépôt: **79400263.4**

(22) Date de dépôt: **25.04.79**

## (54) Catalyseur comprenant un composé de magnésium et un halogénure de métal de transition, procédé de préparation dudit catalyseur, système catalytique comprenant ledit catalyseur et procédé de polymérisation utilisant ledit système catalytique.

(30) Priorité: **05.05.78 FR 7813416**

(43) Date de publication de la demande:
**14.11.79 Bulletin 79/23**

(45) Mention de la délivrance du brevet:
**11.01.84 Bulletin 84/2**

(84) Etats contractants désignés:
**BE CH DE GB IT LU NL SE**

(56) Documents cités:
**FR - A - 1 220 307**
**GB - A - 1 157 925**
**US - A - 3 478 008**

**Le dossier contient des informations techniques présentées postérieurement au dépôt de la demande et ne figurant pas dans le présent fascicule.**

(73) Titulaire: **Société Chimique des Charbonnages**
**Tour Aurore Place des Reflets Cédex no 5**
**F-92080 Paris La Défense 2 (FR)**

(72) Inventeur: **Bujadoux, Karel**
**31 Avenue Van Pelt**
**F-62300 Lens (FR)**

(74) Mandataire: **Dubost, Thierry**
**Société Chimique des Charbonnages Service**
**Propriété Industrielle B.P. No 1**
**F-62160 Bully Les Mines (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 005 394 B1

# Catalyseur comprenant un composé de magnésium et un halogénure de métal de transition, procédé de préparation dudit catalyseur, système catalytique comprenant ledit catalyseur et procédé de polymérisation utilisant ledit système catalytique

La présente invention se rapporte à de nouveaux catalyseurs comprenant du magnésium et un métal de transition, utilisables notamment pour la polymérisation des oléfines, ainsi qu'à un procédé de préparation de ces catalyseurs.

Différents catalyseurs comprenant du magnésium monovalent et un métal de transition sont déjà connus pour polymériser les oléfines. Notamment le brevet français n° 1.220.307 décrit comme catalyseurs des combinaisons de composés de magnésium monovalent (obtenus soit par réduction électrolytique soit par pyrolyse d'un halogénure d'aryl-magnésium) et de composés polyvalents des métaux des sous-groupes IV à VI de la Classification Périodique, le rapport molaire des premiers cités aux derniers cités dans lesdites combinasons étant compris entre 0,1 et 10. Ces combinaisons sont utilisées pour polymériser les oléfines dans des solvants organique liquides inertes à des températures comprises entre 0 et 350°C et sous des pressions comprises entre 1 et 300 atmosphères.

Ces catalyseurs sont présentés comme avantageux parce qu'on évite le danger de travailler avec des composés inflammables et s'enflammant parfois spontanément comme les trialkylaluminiums (page 2 du brevet français n° 1.220.307). Cependant leurs rendements catalytiques dans la polymérisation notamment de l'éthylène sont faibles et conduisent à prévoir des étapes de lavage du polymère pour atteindre les qualités commerciales.

Le brevet britannique n° 1.157.925 décrit par ailleurs un procédé de production d'un composé monovalent de magnésium consistant à décomposer thermiquement un halogénure d'alkylmagnésium à température élevée et sous pression réduite. Le brevet américain n° 3.478.008 décrit un catalyseur de polymérisation de composés éthyléniquement insaturés, consistant en le produit de réaction d'un trialkylaluminium, d'hydrure de magnésium et de tétrachlorure de titane.

Un premier objet de l'invention consiste en des catalyseurs stables thermiquement jusqu'à des températures de l'ordre de 350°C environ et pouvant être préparés par un procédé simple. Un second objet de l'invention consiste en un procédé de production de polymères d'éthylène et, plus particulièrement, en un procédé de production de polymères d'éthylène de masse volumique comprise entre 0,905 et 0,960 g/cm3 et d'indice de fluidité compris entre 0,1 et 100 environ. Un troisième objet de l'invention consiste en un procédé permettant de produire des polymères d'éthylène d'indice de fluidité compris entre 0,1 et 2 environ et ayant une proportion de très hautes masses moléculaires suffisamment importante pour permettre l'amélioration de leurs caractéristiques mécaniques.

Le premier objet précité est atteint au moyen des catalyseurs selon l'invention comprenant le produit obtenu par broyage en commun dans une atmosphère inerte de:

(a) un composé de magnésium renfermant au moins une espèce Y choisie parmi les monohalogénures de formule $(MgX)(MgX_2)_a(Mg)_b(MgO)_c$ dans laquelle X est un halogène, $0{,}1 \leqslant a \leqslant 0{,}75$, $0 \leqslant b \leqslant 0{,}70$ et $0 \leqslant c \leqslant 0{,}25$, les hydrohalogénures de formule $(HMgX)(MgX_2)_a(MgH_2)_b(Mg(OR)_2)_c$ dans laquelle R est un radical hydrocarboné, $0 \leqslant a \leqslant 0{,}75$, $0 \leqslant b \leqslant 0{,}70$ et $0 \leqslant c \leqslant 0{,}25$ et l'hydrure $MgH_2$ ladite espèce Y étant formée, lorsqu' elle est constituée par un hydrohalogénure ou un monohalogénure, par décomposition thermique d'un halogénure organomagnésien pulvérulent $R_1MgX$ ($R_1$ étant un radical organique) et de

(b) au moins un halogénure d'un métal de transition choisi parmi le titane et le vanadium, la valence dudit métal dans ledit halogénure étant inférieure ou égale à 3,

les quantités respectives de (a) et de (b) dans ledit produit étant telles que le rapport atomique du magnésium audit métal de transition soit compris entre 1 et 25.

Des halogénures (b) utilisables selon l'invention sont notamment le trichlorure de titane $TiCl_3$, de préférence syncristallisé avec le chlorure d'aluminium $AlCl_3$ sous la forme $TiCl_3 \frac{1}{3} AlCl_3$ dite trichlorure de titane violet, le dichlorure de titane $TiCl_2$, le trichlorure de vanadium $VCl_3$ et les mélanges de ces halogénures entr'eux.

Des composés (a) utilisables selon l'invention sont notamment l'hydrure de magnésium $Mg\,H_2$ et les produits obtenus lors de la décomposition thermique d'un halogénure organomagnésien pulvérulent $R_1MgX$, $R_1$ étant un radical organique et de préférence un radical hydrocarboné. Des halogénures organomagnésiens pulvérulents ont été décrits dans le brevet français n° 2.370.054. Leur décomposition thermique dans des conditions contrôlées de température conduit tout d'abord à des composés renfermant l'espèce HMgX et ayant pour formule:

$$(HMgX)(MgX_2)_a(MgH_2)_b(Mg(OR)_2)_c$$

dans laquelle R est un radical hydrocarboné, $0 \leqslant a \leqslant 0{,}75$, $0 \leqslant b \leqslant 0{,}70$ et $0 \leqslant c \leqslant 0{,}25$. La poursuite de la décomposition thermique des halogénures organomagnésiens conduit, dans des conditions contrôlées de température, à des composés renfermant l'espèce MgX et ayant pour formule:

$$(MgX)(MgX_2)_a(Mg)_b(MgO)_c$$

dans laquelle a, b et c ont les valeurs $0,1 \leqslant a \leqslant 0,75$, $0 \leqslant b \leqslant 0,70$ et $0 \leqslant c \leqslant 0,25$.

Les formules complexes de espèces HMgX et MgX selon l'invention s'expliquent par la nature complexe des halogénures organomagnésiens pulvérulents dont ils dérivent. Le plus souvent, ceux-ci sont tels que $0,1 \leqslant a \leqslant 0,5$, $0 \leqslant b \leqslant 0,45$ et $0 \leqslant c \leqslant 0,25$. De plus, le chlore et le brome sont préférés en tant qu'halogènes et les radicaux aliphatiques sont préférés en tant que radicaux $R_1$. Les catalyseurs selon l'invention peuvent en outre comprendre un ou plusieurs supports inertes tels que, par exemple, les dihalogénures de calcium, zinc, chrome, manganèse, fer, cobalt ou nickel l'hydroxyde ou le carbonate de magnésium, la silice, l'alumine ou la magnésie et, éventuellement, un ou plusieurs agents complexants tels que, par exemple, éthers, amines.

Pour l'obtention des catalyseurs selon l'invention, le broyage en commun est effectué pendant une durée suffisante dont l'évaluation est à la portée de l'homme de l'art. Les composés (a) entrant dans la formulation des catalyseurs selon l'invention sont caractérisés par leur surface spécifique élevée. Ceux dans lesquels l'espèce Y est l'hydrure d'halogénomagnésium HMgX ont une surface spécifique, déterminée au moyen d'un sorptmètre étalonné selon la norme BS 4359/1, supérieure à 150 m2/g. Ceux dans lesquels l'espèce Y est le monohalogénure de magnésium MgX ont une surface spécifique, déterminée par la même méthode, supérieure à 50 m2/g.

Les catalyseurs selon l'invention peuvent étre préparés par un procédé simple consistant, comme indiqué précédemment, à mettre en contact les composés (a) et (b). Ceci ne crée pas de difficulté lorsque le composé (a) renferme uniquement l'espèce $MgH_2$ qui est un produit commercial dont on aura seulement soin de le rendre parfaitement anhydre avant sa mise en contact avec le composé (b). Lorsque le composé (a) renferme l'espèce HMgX ou bien l'espèce MgX, le procédé de préparation des catalyseurs selon l'invention consiste d'abord à former, dans une première étape, un halogénure organomagnésien pulvérulent (par exemple selon la méthode du brevet français n° 2.370.054) puis, dans une seconde étape, à décomposer thermiquement ledit halogénure organomagnésien pulvérulent dans des conditions contrôlées de température et enfin, dans une troisième étape, à mettre en contact le produit de ladite décomposition avec au moins un halogénure (b).

Par conditions contrôlées de température on entend que la température dans la seconde étape du procédé sera choisie d'une part en fonction de l'halogénure organomagnésien formé dans la première étape, et plus particulièrement du radical $R_1$ dudit halogénure, et d'autre part en fonction de l'espèce Y qu'on désire mettre en contact avec un halogénure (b) dans la troisième étape. Ainsi lorsque le radical $R_1$ est un radical aliphatique, la décomposition de l'halogénure organomagnésien pulvérulent se déroule en deux temps au fur et à mesure de l'élévation de la température. Lorsque celle-ci atteint une valeur comprise entre 170° et 220°C, la décomposition produit d'abord l'espèce HMgX ayant la formule sus-mentionnée. Puis lorsque la température dépasse 300°C, la décomposition se poursuit et transforme l'espèce HMgX en l'espèce MgX de formule sus-mentionnée. Lorsque le radical $R_1$ est un radical aromatique, la décomposition de l'halogénure organomagnésien pulvérulent produit immédiatement, dés que la température dépasse 250°C, l'espèce MgX ayant la formule sus-mentionnée.

Pour mémoire on rappelle que la méthode du brevet français n° 2.370.054 employée avantageusement dans la première étape du procédé selon l'invention consiste à faire réagir, sous atmosphère de gaz inerte et sec, un monohalogénure organique $R_1X$ et du magnésium sous forme de grains massifs convexes de taille comprise entre environ 1 et 15 mm, la température de la réaction étant inférieure à la température de décomposition de l'halogénure organomagnésien et supérieure d'au moins 10°C au point d'ébullition du monohalogénure organique sous la pression de réaction considérée. Cette méthode conduit à des produits pulvérulents dans lesquels les indices a et b, représentant respectivement les quantités de dihalogénure et d'hydrure de magnésium formées, ont les valeurs sus-mentionnées et l'indice c est nul. Lorsque la réaction a lieu en présence d'un dérivé métallique d'une composé organique comportant une fonction hydroxy ou une fonction cétone, énolisable, par exemple en introduisant un alcool dans le milieu de réaction, la méthode conduit à des produits pulvérulents dans lesquels l'indice c, représentant la quantité d'alcoolate de magnésium formé, n'est pas nul et a la valeur sus-mentionnée.

Les catalysurs selon l'invention présentent une grande utilité pour la polymérisation des oléfines, en particulier de l'éthylène, lorsqu'ils entrent dans la constitution d'un système catalytique comprenant en outre un activateur choisi parmi les hydrures et les composés organométalliques des métaux des groupes I à III de la Classification Périodique, en quantité telle que le rapport atomique de métal dudit activateur au métal de transition du catalyseur selon l'invention soit compris entre 0,1 et 100. Plus particulièrement les activateurs préférés sont d'une part les trialkylaluminiums et d'autre part les alkylsiloxalanes tels que ceux décrits dans le brevet américain n° 3.969.332.

Les second et troisième objets de l'invention sont donc atteints au moyen du procédé selon l'invention consistant à polymériser l'éthylène ou à copolymériser l'éthylène avec des $\alpha$-oléfines ayant de 3 à 8 atomes de carbone à une température comprise entre 20° et 350°C, sous une pression comprise entre 1 et 2500 bars et au moyen du système catalytique décrit précédemment. Les oléfines entrant dans le champ du procédé selon l'invention sont en particulier le propène, le butène-1, le méthyl-4-pentène-1, l'hexène-1 et l'octène-1. Le procédé selon l'invention recouvre en premier lieu un procédé dit à basse pression, selon lequel les oléfines sont polymérisées à une température généralement comprise entre 20° et 200°C, en solution ou en suspension dans un hydrocarbure liquide inerte

ayant au moins 6 atomes de carbone choisi de préférence parmi les aliphatiques on cycloaliphatiques saturés et les aromatiques, la pression de polymérisation étant comprise entre 1 et 200 bars. Le procédé selon l'invention recouvre en second lieu un procédé dit à haute pression applicable de préférence à la polymérisation ou à la copolymérisation de l'ethylène à une température comprise entre 180° et 350°C, en solution dans le monomère, la pression de polymérisation étant comprise entre 400 et 2500 bars environ. Ce dernier procédé peut mettre en jeu, notamment lorsque le température et/ou la pression de polymérisation ne sont pas très élevées, la présence d'un hydrocarbure inerte ayant de préférence moins de 5 atomes de carbone tel que par exemple propane ou butane. Dans le procédé haute pression, le temps de séjour moyen du système catalytique selon l'invention dans le réacteur de polymérisation est avantageusement compris entre 2 et 100 secondes et dépend de la température dans ledit réacteur en ce sens qu'il est d'autant plus élevé que la température est plus basse. Dans le procédé basse pression, le temps de séjour moyen du système catalytique selon l'invention dans le réacteur de polymérisation est généralement de plusieurs minutes et peut atteindre jusqu'à quelques heures.

Du fait de leur nature pulvérulente, les catalyseurs selon l'invention sont bien adaptés pour être employés dans des procédés de polymérisation en lit fluidisé des oléfines comme par exemple ceux décrits dans le brevet français n° 1.578.481 et le brevet américain n° 3.790.036.

Lorsque dans le procédé haut pression on utilise un réacteur autoclave ou tubulaire ayant plusieurs zones réactionnelles, il pourra être avantageux, en vue de produire certaines qualités de polymères, d'adopter une disposition particulière de l'installation de polymérisation comme par exemple l'une de celles décrites dans les brevets français n° 2.346.374 et 2.385.745. Souvent il sera utile pour contrôler l'indice de fluidité du polymère, notamment du polyéthylène, d'effectuer la polymérisation en présence d'un agent de transfert de chaîne comme l'hydrogène. Dans le procédé haute pression, cet agent sera utilisé à raison de 0,04 à 2% en volume par rapport à l'éthylène. Une particularité de l'emploi de l'hydrogène dans le cadre du procédé selon l'invention réside en ce que l'indice de fluidité du polymère est très sensible à la quantité d'hydrogène introduite et varie de manière importante en fonction de celle-ci.

Le procédé selon l'invention permet, en ce qui concerne la polymérisation ou la copolymérisation de l'éthylène, de produire toute une gamme de polymères dont la masse volumique est comprise entre 0,905 et 0,960 g/cm3 et dont l'indice de fluidité est compris entre 0,1 et 100 dg/mn environ. Les polymères de masse volumique relativement basse, par exemple comprise entre 0,905 et 0,935 g/cm3, sont obtenus en copolymérisant l'éthylène avec une $\alpha$-oléfine ayant de 3 à 8 atomes de carbone, par exemple le propène, à raison de 15 à 35% en poids. Un avantage particulier du procédé selon l'invention est de permettre la production de polymères d'éthylène d'indice de fluidité compris entre 0,1 et 2 dg/mn environ et comportant une proportion élevée de très hautes masses moléculaires, ce qui améliore certaines de leurs propriétés mécaniques.

D'autres avantages de l'invention apparaîtront à la lecture des exemples suivants donnés à titre illustratif et non limitatif.

## Exemple 1

Par le partie supérieure d'un réacteur vertical cylindrique muni d'une grille à sa partie inférieure et rempli de magnésium sous forme de petits cylindres de 3 à 4 mm de longueur découpés à partir d'un fil, on introduit du chlorure de n-butyle au moyen d'une pompe doseuse. Un contre-courant d'azote sec est introduit par la base du réacteur. Une intense friction entre les grains de magnésium est assurée au moyen d'un agitateur mécanique. En maintenant une température de la grille de 135°C, on recueille une poudre parfaitement blanche de chlorure de n-butylmagnésium. Cette poudre est d'abord dégazée sous pression réduite à 50°C afin d'éliminer les gas éventuellement occlus ainsi que tout produit volatil. En pratique, ce dégazage ne paraît pas indispensable car la perte de poids subie par l'échantillon est inférieure à 1%.

La poudre dégazée est ensuite placée dans un four dont la température est régulée à 210°C et y est maintenue pendant trois heures. Les gaz issus de la décomposition, constitués d'un mélange de butènes et de butanes, sont analysés périodiquement par chromatrographie en phase gazeuse. Le dosage des constituants de ces gaz, cumulé à l'analyse pondérale et thermogravimétrique de la poudre de départ, permet d'établir pour la poudre décomposée thermiquement la formule suivante:

$(HMgCl)\ (MgCl_2)_{0,38}\ (MgH_2)_{0,19}$

Sa surface spécifique mesurée au moyen d'un sorptmètre étalonné selon la norme BS 4359/1 est égale à 154 m2/g.

## Exemple 2

Dans l'appareillage décrit à l'example 1 on faite réagir, en maintenant une température de grille de 120°C, le bromure de n-butyle sur le magnésium en grains massifs. La poudre blanche de bromure de n-butylmagnésium que l'on recueille est dégazée à 50°C puis maintenue pendant quatre heures et demie dans un four de température régulée à 210°C. Le dosage par chromatographie en phase gazeuse des gaz issus de la décomposition, cumulé à l'analyse pondérale et thermogravimétrique de la poudre de départ, permet d'établir pour la poudre décomposée thermiquement la formule suivante:

$(HMgBr)\ (MgBr_2)_{0,186}$

## Exemple 3

On prépare une poudre de chlorure de n-butylmagnésium en reproduisant la méthode décrite à l'exemple 1, à l'exception de la température de grille qui est ici maintenue à 130°C.

La poudre ainsi obtenue est soumise à analyse pondérale puis dégazée à 50°C et placée dans un four. La température du four est maintenue à 210°C pendant une durée de 3 heures et demie, à l'issue de laquelle la poudre a subi une perte de poids de 40,33%, puis à 330°C pendant une durée de 3 heures, à l'issue de laquelle la perte de poids atteint 40,76%. Ces données conjuguées à celles de l'analyse pondérale permettent d'établir la formule de la poudre obtenue après décomposition à 330°C: $(MgCl)\ (MgCl_2)_{0,25}\ (MgH_2)_{0,06}$

La surface spécifique de cette poudre, mesurée au moyen d'un sorptmètre étalonné selon la norme BS 4359/1, est égale à 54 m2/g.

## Exemple 4

On prépare une poudre de chlorure de n-butylmagnésium en reproduisant la méthode décrite à l'exemple 1, à l'exception que d'une part la température de grille est maintenue ici à 126°C et que d'autre part on ajoute 20% environ en moles de n-butanol au chlorure de butyle. La poudre ainsi obtenue est soumise à analyse pondérale puis dégazée à 50°C et placée dans un four. La température du four est maintenue à 215°C pendant une durée de 5 heures, à l'issue de laquelle la poudre a subi une perte de poids de 27,4%. Cette donnée, conjuguée à celles de l'analyse pondérale, permet d'établir la formule suivante pour la poudre décomposée:
$(HMgCl)\ (MgCl_2)_{0,45}\ (MgH_2)_{0,05}\ [Mg(OC_4H_9)_2]_{0,23}$

## Exemples 5 à 14

Le composé (a) du catalyseur selon l'invention, constitué soit par l'un des composés pulvérulents des exemples 1 à 4 soit par de l'hydrure de magnésium $MgH_2$ en poudre substantiellement anhydre, est cobroyé avec du chlorure de titane violet $TiCl_3\ \frac{1}{3}\ AlCl_3$ commercialisé par la société TOHO TITANIUM sous la référence TAC 191 en quantité telle que le rapport atomique $^{Mg}/Ti$ atteigne la valeur indiquée dans le tableau I ci-dessous. Le catalyseur ainsi préparé est mis en suspension dans une coupe $C_{11}$—$C_{12}$ d'hydrocarbures et activé par du trioctylaluminium en quantité telle que le rapport atomique $^{Al}/Ti$ soit égal à 8.

Dans un réacteur autoclave en acier de contenance 1 litre on introduit 600 ml de la coupe $C_{11}$—$C_{12}$ sus-mentionnée, puis de l'éthylène jusqu'à saturation sous une pression de 6 bars, puis la suspension de catalyseur préalablement préparée. la polymérisation de l'éthylène est effectuée à la température de 200°C pendant une durée d'une minute en maintenant une pression d'éthylène constante de 6 bars. A l'issue de cette durée, la solution est récupérée et le polymère séparé par filtration après refroidissement. On mesure alors le rendement catalytique $R_c$, indiqué dans le tableau I, en grammes de polymère par gramme de titane par minute et par atmosphère.

TABLEAU I

| Exemple | 5 | 6 | 7 | 8 | 9 |
|---|---|---|---|---|---|
| (a) | 1 | 1 | 1 | 2 | 3 |
| Mg / Ti | 10 | 5,8 | 2,2 | 5,7 | 21,3 |
| $R_c$ | 382 | 422 | 378 | 476 | 463 |

| Exemple | 10 | 11 | 12 | 13 | 14 |
|---|---|---|---|---|---|
| (a) | 3 | 3 | 4 | 4 | $MgH_2$ |
| Mg / Ti | 9,1 | 2 | 6 | 10 | 2 |
| $R_c$ | 463 | 301 | 431 | 344 | 310 |

Exemples 15 à 17

Le composé (a) du catalyseur selon l'invention, constitué par l'un composés pulvérulents des exemples 2, 3 et 4, est cobroyé avec le chlorure de titane violet TAC 191 en quantité telle que le rapport atomique Mg/Ti soit égal à 2. Le catalyseur ainsi préparé est mis en suspension dans une coupe $C_{11}$—$C_{12}$ d'hydrocarbures et activé par du trioctylaluminium en quantité telle que le rapport atomique Al/Ti soit égal à 100. Dans un réacteur de contenance 1 litre on introduit 600 ml de la coupe $C_{11}$—$C_{12}$ sus-mentionnée, puis de l'éthylène jusqu'à saturation sous pression atmosphérique puis la suspension de catalyseur préalablement préparée. La polymérisation de l'éthylène est effectuée à la température de 80°C pendant une durée d'une heure en maintenant une pression d'éthylène constante de 1 bar. A l'issue de cette durée. la suspension est récupérée et le polymère séparé par filtration après refroidissement. On mesure alors le rendement catalytique $R_c$ indiqué dans le tableau II en kilogrammes de polymère par gramme de titane par heure et par atmosphère.

TABLEAU II

| Exemple | 15 | 16 | 17 |
|---|---|---|---|
| (a) | 2 | 3 | 4 |
| $R_c$ | 9,3 | 8,9 | 13,7 |

Exemples 18 à 26

Le composé (a) du catalyseur selon l'invention, constitué soit par l'un des composés pulvérulents des exemples 1 et 3 soit par de l'hydrure de magnésium $MgH_2$ en poudre substantiellement anhydre, est cobroyé pendant une durée de 2 heures avec le chlorure de titane violet TAC 191 (dans l'exemple 18 celui-ci a été remplacé par un mélange équimoléculaire de TAC 191 et de trichlorure de vanadium) en quantité telle que le rapport atomique Mg/Ti ($^{Mg}/Ti + V$ pour l'exemple 18) atteigne la valeur indiquée dans le tableau III ci-après. Le catalyseur ainsi préparé est mis en suspension dans une coupe $C_{11}$—$C_{12}$ d'hydrocarbures et activé par du diméthyléthyldiéthylsiloxalane en quantité telle que le rapport atomique $^{Al}/Ti$ ($^{Al}/Ti + V$ pour l'exemple 18) soit égal à 8 (sauf les exemples 21 et 22 pour lesquels $^{Al}/Ti$ est respectivement égal à 4 et 0,3). La polymérisation de l'éthylène est ensuite effectuée dans les conditions opératoires des exemples 5 à 14 et le rendement catalytique $R_c$ est indiqué dans le tableau III en grammes de polymère par gramme de titane par minute et par atmosphère.

TABLEAU III

| Exemple | 18 | 19 | 20 | 21 | 22 |
|---|---|---|---|---|---|
| (a) | 1 | 1 | 1 | 1 | 1 |
| Mg / Ti | 3 | 23 | 10 | 3 | 3 |
| $R_c$ | 306 | 415 | 415 | 406 | 219 |

| Exemple | 23 | 24 | 25 | 26 |
|---|---|---|---|---|
| (a) | 1 | 3 | 3 | $MgH_2$ |
| Mg / Ti | 1 | 9,9 | 3 | 2 |
| $R_c$ | 169 | 463 | 434 | 241 |

Exemples 27 à 40

Le catalyseur obtenu par cobroyage dans les conditions de l'un des exemples 5 à 14 et 18 à 26 est dispersé dans du méthylcyclohexane et activé soit par du trioctylaluminium (activateur A) soit par du diméthyléthyldiéthylsiloxalane (activateur B) en quantité telle que le rapport atomique Al/Ti soit égal à 6 (sauf l'exemple 34 pour lequel Al/Ti = 4). On effectue alors la polymérisation de l'éthylène en continu sous une pression de 400 bars (600 bars pour les exemples 33 à 35) dans un réacteur autoclave de volume 0,6 1 maintenu à la température T en injectant la dispersion de catalyseur ainsi préparée selon un débit tel que le temps de séjour moyen du catalyseur dans le réacteur soit égal à 30 secondes environ. De l'hydrogène est injecté dans le réacteur pour contrôler l'indice de fluidité du polymère produit. Le tableau IV ci-après indique, outre les conditions opératoires (nature du catalyseur repéré par le n° de l'un des exemples précédents, nature de l'activateur, température exprimée en °C, teneur en hydrogène exprimée en pourcent en volume), le rendement catalytique $R_c$ exprimé en kilogrammes de polyéthylène par milliatome de titane (titane et vanadium pour l'exemple 33), l'indice de fluidité du polymère IF mesuré selon la norme ASTM D 1238 et exprimé en dg/mn et l'indice de répartition moléculaire défini comme le rapport Mw/Mn de la masse moléculaire moyenne en poids à la masse moléculaire moyenne en nombre, celles-ci étant déterminées par chromatographie de perméation de gel.

TABLEAU IV

| Exemple | Catalyseur | Activateur | T°C | % $H_2$ | $R_c$ | IF | $M_w/M_n$ |
|---|---|---|---|---|---|---|---|
| 27 | 6 | A | 239 | 2 | 6,9 | | 3,4 |
| 28 | 6 | B | 245 | 1,5 | 5,6 | | 10 |
| 29 | 7 | B | 233 | 2 | 6,0 | 40 | 2,9 |
| 30 | 8 | A | 227 | 1 | 8,9 | | 3,1 |
| 31 | 13 | A | 212 | 1,5 | 6,3 | | 3,3 |
| 32 | 14 | A | 221 | 1,8 | 5,7 | | 4,5 |
| 33 | 18 | B | 230 | 0,5 | 4,2 | 5,6 | 7,7 |
| 34 | 21—22 | B | 230 | 0,5 | 5,6 | 3,9 | 6,9 |
| 35 | 21—22 | B | 230 | 2 | 7,6 | 37 | 5,6 |
| 36 | 20 | B | 228 | 2 | 5,8 | 54 | 3,2 |
| 37 | 23 | B | 234 | 1,9 | 5,7 | 27 | |
| 38 | 24 | B | 254 | 2 | 8,9 | 100 | |
| 39 | 24 | A | 235 | 1 | 9,6 | 23 | |
| 40 | 25 | A | 200 | 1 | 6,5 | | 3 |

Exemples 41 et 42

La polymérisation de l'éthylène est effectuée dans un réacteur autoclave cylindrique dans lequel on maintient une température de 240°C et une pression de 1300 bars. Les catalyseurs utilisés sont celui de l'exemple 5 (pour l'exemple 41) et le produit obtenu par cobroyage du TAC 191 et de bichlorure de magnésium anhydre dans le même rapport atomique $^{Mg}/Ti$ égal à 10 (pour l'exemple comparatif 42). Ces catalyseurs sont activés par le trioctylaluminium selon un rapport $^{Al}/Ti$ égal à 3. Le temps de séjour moyen de chaque système catalytique dans le réacteur est de 40 secondes. Le tableau V ci-après indique, outre le pourcentage en volume d'hydrogène présent dans le réacteur, le rendement catalytique $R_c$ en kilogrammes de polymère par gramme de titane, l'indice de fluidité IF du polymère (mesuré selon la norme ASTM D 1238—73), la masse volumique $\rho$ du polymère exprimée en g/cm3, la proportion de très hautes masses moléculaires représentée par

$$M_z = \frac{\int_0^\infty M^2.C(M)dM}{\int_0^\infty M.C(M)dM}$$

(exprimée en milliers et déterminée par chromatographie de perméation de gel), la résistance à la rupture RR (mesurée selon la norme ISO R 527 et exprimée en kg/cm2) et la résistance limite en flexion RLF (mesurée selon la norme NFT 51 001 et exprimée en kg/cm2).

Exemples 43 à 46

La polymérisation de l'éthylène est effectuée sous une pression de 1000 bars dans un réacteur autoclave agité comportant 3 zones de volume identique. La première zone, alimentée en catalyseur et par 1/3 du débit total de monomère, est maintenue à une température de 210°C; la seconde zone seulement alimentée par 1/3 du débit total de monomère est maintenue à 180°C; la troisième zone, alimentée en catalyseur et par 1/3 du débit total de monomère, est maintenue à 260°C.

Les catalyseurs utilisés sont ceux des exemples 25 (pour l'exemple 43), 8 (pour l'exemple 44), 12 (pour l'exemple 45) et le produit obtenu par cobroyage du TAC 191 et de bichlorure de magnésium

anhydre dans le même rapport atomique $^{Mg}/_{Ti}$ égal à 3 (pour l'exemple comparatif 46). Ces catalyseurs sont activés, dans le rapport $^{Al}/_{Ti}$ égal à 3, par leur activateur respectif (activateur A pour les exemples 44 à 46, activateur B pour l'exemple 43). Le temps de séjour moyen de chaque système catalytique dans le réacteur est de 75 secondes. Le tableau V ci-après comporte l'indication des mêmes grandeurs que pour les deux exemples précédents.

TABLEAU V

| Exemple | 41 | 42 | 43 | 44 | 45 | 46 |
|---|---|---|---|---|---|---|
| % $H_2$ | 0,04 | 0,12 | 0,05 | 0,04 | 0,04 | 0,2 |
| $R_c$ | 273 | 123 | 127 | 100 | 142 | 100 |
| IF | 0,4 | 0,4 | 0,4 | 0,7 | 0,2 | 0,4 |
| $\rho$ | 0,953 | 0,954 | 0,955 | 0,956 | 0,954 | 0,953 |
| Mz | 430 | 345 | 460 | 460 | 475 | 370 |
| RR | 355 | 280 | 320 | 330 | 305 | 270 |
| RLF | 260 | 195 | 170 | 160 | 175 | 170 |

**Revendications**

1. Catalyseur comprenant le produit obtenu par broyage en commun dans une atmosphère inerte de:
(a) un composé de magnésium renfermant au moins une espèce Y choisie parmi les monohalogénures de formule $(MgX)(MgX_2)_a(Mg)_b(MgO)_c$ dans laquelle X est un halogène, $0{,}1 \leqslant a \leqslant 0{,}75$, $0 \leqslant b \leqslant 0{,}70$ et $0 \leqslant c \leqslant 0{,}25$, les hydrohalogénures de formule $(HMgX)(MgX_2)_a(MgH_2)_b(Mg(OR)_2)_c$ dans laquelle R est un radical hydrocarboné, $0 \leqslant a \leqslant 0{,}75$, $0 \leqslant b \leqslant 0{,}70$ et $0 \leqslant c \leqslant 0{,}25$ et l'hydrure $MgH_2$ ladite espèce Y étant formée, lorsqu'elle est constituée par un hydrohalogénure ou un monohalogénure, par décomposition thermique d'un halogénure organomagnésien pulvérulent $R_1MgX$ ($R_1$ étant un radical organique) et de
(b) au moins un halogénure d'un métal de transition choisi parmi le titane et le vanadium, la valence dudit métal dans ledit halogénure étant inférieure ou égale à 3,
les quantités respectives de (a) et de (b) dans ledit produit étant telles que le rapport atomique du magnésium audit métal de transition soit compris entre 1 et 25.

2. Procédé de préparation d'un catalyseur selon la revendication 1, caractérisé en ce qu'on broie en commun dans une atmosphère parfaitement inerte:
(a) un composé de magnésium renfermant au moins une espèce Y choisie parmi les monohalogénures de formule $(MgX)(MgX_2)_a(Mg)_b(MgO)_c$ dans laquelle X est un halogène, $0{,}1 \leqslant a \leqslant 0{,}75$, $0 \leqslant b \leqslant 0{,}70$ et $0 \leqslant c \leqslant 0{,}25$, les hydrohalogénures de formule $(HMgX)(MgX_2)_a(MgH_2)_b(Mg(OR)_2)_c$ dans laquelle R est un radical hydrocarboné, $0 \leqslant a \leqslant 0{,}75$, $0 \leqslant b \leqslant 0{,}70$ et $0 \leqslant c \leqslant 0{,}25$ et l'hydrure $MgH_2$ ladite espèce Y étant formée, lorsqu'elle est constituée par un hydrohalogénure ou un monohalogénure, par décomposition thermique d'un halogénure organomagnésien pulvérulent $R_1MgX$ ($R_1$ étant un radical organique) et
(b) au moins un halogénure d'un métal de transition choisi parmi le titane et le vanadium, la valence dudit métal dans ledit halogénure étant inférieure ou égale à 3,
les quantités respectives de (a) et de (b) soumises au broyage étant telles que le rapport atomique du magnésium audit métal de transition soit compris entre 1 et 25.

3. Procédé selon la revendication 2, l'espèce Y étant un hydrohalogénure, caractérisé en ce que Y est formée par décomposition à une température comprise entre 170° et 220°C d'un halogénure organomagnésien pulvérulent dont le radical organique est un radical aliphatique.

4. Procédé selon la revendication 2, l'espèce Y étant un monohalogénure, caractérisé en ce que Y est formée par décomposition à une température supérieure à 300°C d'un halogénure organomagnésien dont le radical organique est un radical aliphatique.

5. Procédé selon la revendication 2, l'espèce Y étant un monohalogénure, caractérisé en ce que Y est formé par décomposition à une température supérieure à 250°C d'un halogénure organomagnésien pulvérulent dont le radical organique est un radical aromatique.

6. Système catalytique comprenant d'une part un catalyseur selon la revendication 1 et d'autre part un activateur choisi parmi les hydrures et les composés organométalliques des métaux des groupes I à III de la Classification Périodique, le rapport atomique du métal dudit activateur au métal de transition du catalyseur étant compris entre 0,1 et 100.

7. Système catalytique selon la revendication 6, caractérisé en ce que l'activateur est choisi parmi les trialkyaluminiums et les alkysiloxalanes.

8. Procédé de polymérisation de l'éthylène ou de copolymérisation de l'éthylène et d'$\alpha$-oléfines ayant de 3 à 8 atomes de carbone, à une température de 20°C à 350°C et sous une pression de 1 à 2500 bars, caractérisé en ce que ladite polymérisation ou copolymérisation est effectuée en présence d'un système catalytique selon la revendication 6.

9. Procédé selon la revendication 8, caractérisé en ce que la polymérisation ou copolymérisation est effectuée à une température comprise entre 20° et 200°C, sous une pression comprise entre 1 et 200 bars et en solution ou en suspension dans un hydrocarbure liquide inerte ayant au moins 6 atomes de carbone.

10. Procédé selon la revendication 8, caractérisé en ce que la polymérisation ou copolymérisation est effectuée à une température comprise entre 180° et 350°C et sous une pression comprise entre 400 et 2500 bars, le temps de séjour moyen du système catalytique dans le réacteur de polymérisation étant compris entre 2 et 100 secondes.

**Patentansprüche**

1. Katalysator enthaltend das Produkt, das erhalten wird durch gemeinsames Mahlen in inerter Atmosphäre von

a) einer Magnesiumverbindung, die mindestens eine Gattung Y ausgewählt aus der Gruppe bestehendaus den Monohalogeniden der Formel (MgX) $(MgX_2)_a$ $(Mg)_b$ $(MgO)_c$, worin X Halogen ist, $0{,}1 \leqslant a \leqslant 0{,}75$, $0 \leqslant b \leqslant 0{,}70$ und $0 \leqslant c \leqslant 0{,}25$, den Hydrohalogeniden der Formel (HMgX) $(MgX_2)_a$ $(MgH_2)_b$ $(Mg(OR)_2)_c$, worin R ein Kohlenwasserstoffradikal ist, $0 \leqslant a \leqslant 0{,}75$, $0 \leqslant b \leqslant 0{,}70$ und $0 \leqslant c \leqslant 0{,}25$, und dem Hydrid $MgH_2$ umfaßt, wobei die genannte Gattung Y, wenn sie von einem Hydrohalogenid oder einem Monohalogenid gebildet ist, durch thermische Zersetzung eines feinpulvrigen Organomagnesiumhalogenids $R_1MgX$ (wobei $R_1$ ein organisches Radikal ist) und

b) mindestens eines Halogenids eines Übergangsmetalls ausgewählt aus der Gruppe bestehend aus Titan und Vanadium, wobei die Wertigkeit des genannten Metalles in dem genannten Halogenid geringer als oder gleich 3 ist,

wobei die betreffenden Mengen an a) und b) in dem genannten Produkt derart sind, daß das Atomverhältnis des Magnesium zum Übergangsmetall zwischen 1 und 25 liegt.

2. Verfahren zur Herstellung eines Katalysators nach Anspruch 1, gekennzeichnet durch gemeinsames Mahlen in vollkommen inerter Atmosphäre von:

a) einer magnesiumverbindung, die mindestens eine Gattung Y ausgewählt aus der Gruppe bestehend aus den Monohalogeniden der Formel (MgX) $(MgX_2)_a$ $(Mg)_b$ $(MgO)_c$, worin X Halogen ist, $0{,}1 \leqslant a \leqslant 0{,}75$, $0 \leqslant b \leqslant 0{,}70$ und $0 \leqslant c \leqslant 0{,}25$, den Hydrohalogeniden der Formel (HMgX) $(MgX_2)_a$ $(MgH_2)_b$ $(Mg(OR)_2)_c$, worin R ein Kohlenwasserstoffradikal ist, $0 \leqslant a \leqslant 0{,}75$, $0 \leqslant b \leqslant 0{,}70$ und $0 \leqslant c \leqslant 0{,}25$, und dem Hydrid $MgH_2$ umfaßt, wobei die genannte Gattung Y, wenn sie von einem Hydrohalogenid oder einem Monohalogenid gebildet ist, durch thermische Zersetzung eines feinpulvrigen Organomagnesiumhalogenids $R_1$ MgX (wobei $R_1$ ein organisches Radikal ist) und

b) mindestens eines Halogenids eines Übergangsmetalls ausgewählt aus der Gruppe bestehend aud Titan und Vanadium, wobei die Wertigkeit des genannten Metalles in dem genannten Halogenid geringer als oder gleich 3 ist,

wobei die dem Mahlen unterworfenden betreffenden Mengen an a) und b) derart sind, daß das Atomverhältnis des Magnesium zum Übergangsmetall zwischen 1 und 25 liegt.

3. Verfahren nach Anspruch 2, wobei die Gattung Y ein Hydrohalogenid ist, dadurch gekennzeichnet, daß Y durch Zersetzung bei einer Temperatur zwischen 170° und 220°C eines feinpulvrigen Organomagnesiumhalogenids gebildet wird, dessen organisches Radikal ein aliphatisches Radikal ist.

4. Verfahren nach Anspruch 2, wobei die Gattung Y ein Monohalogenid ist, dadurch gekennzeichnet, daß Y durch Zersetzung bei einer Temperatur oberhalb 300°C eines feinpulvrigen Organomagnesiumhalogenids gebildet wird, dessen organisches Radikal ein aliphatisches Radikal ist.

5. Verfahren nach Anspruch 2, wobei die Gattung Y ein Monohalogenid ist, dadurch gekennzeichnet, daß Y durch Zersetzung bei einer Temperatur oberhalb 250°C eines feinpulvrigen Organomagnesiumhalogenids gebildet wird, dessen organisches Radikal ein aromatisches Radikal ist.

6. Katalysatorsystem enthaltend einerseits einen Katalysator nach Anspruch 1 und anderseits einen Aktivator ausgewählt aus der Gruppe bestehend aus den Hydriden und den organometallischen Verbindung der Metalle der Gruppen I bis III des Periodensystems, wobei das Atomverhältnis des Metalls des genannten Aktivators zum Übergansmetall des Katalysators zwischen 0,1 und 100 beträgt.

7. Katalysatorsystem nach Anspruch 6, dadurch gekennzeichnet, daß der Aktivator ausgewählt ist aus den Aluminiumtrialkylen und den Alkylsiloxalanen.

8. Verfahren zur Polymerisation von Äthylen oder Copolymerisation von Äthylen und $\alpha$-Olefinen mit 3 bis 8 Kohlenstoffatomen bei einer Temperatur von 20°C bis 350°C und unter einem Druck von 1 bis 2500 bar, dadurch gekennzeichnet, daß die Polymerisation oder Copolymerisation in Anwesenheit eines Katalysatorsystems nach Anspruch 6 durchgeführt wird.

9. Verfahren nach Anspruch 8, dadurch gekennzeichnet, daß die Polymerisation oder Copolymerisation bei einer Temperatur zwischen 20°C und 200°C, unter einem Druck zwischen 1 und 200 bar und in Lösung oder in Suspension in einem flüssigen inerten Kohlenwasserstoff mit mindestens 6 Kohlenstoffatomen durchgeführt wird.

10. Verfahren nach Anspruch 8, dadurch gekennzeichnet, daß die Polymerisation oder Copolymerisation bei einer Temperatur zwischen 180° und 350°C und unter einem Druck zwischen 400 und 2500 bar durchgeführt wird, wobei die Verweilzeit des Katalysatorsystems im Polymerisationsreaktor zwischen 2 und 100 s beträgt.

**Claims**

1. A Catalyst comprising the product obtained by co-grinding in an inert atmosphere:
a) a compound of magnesium comprising at least one species Y selected from the group consisting of magnesium mono-halides having the formula

$$(MgX)\ (MgX_2)_a\ (Mg)_b\ (MgO)_c$$

wherein $0 \leqslant a \leqslant 0.75$, $0 \leqslant b \leqslant 0.70$ and $0 \leqslant c \leqslant 0.25$ and x is a halogen atom, halo-magnesium hydrides having the formula

$$(HMgX)\ (MgX_2)_a\ (MgH_2)_b\ [Mg(OR)_2]_c$$

wherein R is a hydrocarbon radical, $0 \leqslant a \leqslant 0.75$, $0 \leqslant b \leqslant 0.70$ and $0 \leqslant c \leqslant 0.25$, and magnesium hydride $MgH_2$, the said species Y being, when it consists of a monohalide or a halo-hydride, obtained by thermal decomposition of a powdery organomagnesium halide $R_1M_gX$ wherein $R_1$ is an organic radical; and
b) at least one halide of a transistion metal selected from the group consisting of titanium and vanadium, the valency of said metal in said halide being lower than or equal to 3,
the quantities of (a) and (b) being such that the atomic ratio of magnesium to said transition metal is between 1 and 25.

2. A process for preparing a catalyst according to claim 1, characterized in that there are subjected to co-grinding in an inert atmosphere:
a) a compound of magnesium comprising at least one species Y selected from the group consisting of magnesium mono-halides having the formula

$$(MgX)\ (MgX_2)_a\ (Mg)_b\ (MgO)_c$$

wherein $0 \leqslant a \leqslant 0.75$, $0 \leqslant b \leqslant 0.70$ and $0 \leqslant c \leqslant 0.25$ and X is a halogen atom, halo-magnesium hydrides having the formula

$$(HMgX)\ (MgX_2)_a\ (MgH_2)_b\ [Mg(OR)_2]_c$$

wherein R is a hydrocarbon radical, $0 \leqslant a \leqslant 0.75$, $0 \leqslant b \leqslant 0.70$ and $0 \leqslant c \leqslant 0.25$, and magnesium hydride $MgH_2$, the said species Y being, when it consists of a monohalide or a halo-hydride, obtained by thermal decomposition of a powdery organomagnesium halide $R_1M_gX$ wherein $R_1$ is an organic radical; and
b) at least one halide of a transistion metal selected from the group consisting of titanium and vanadium, the valency of said metal in said halide being lower than or equal to 3,
the quantities of (a) and (b) being such that the atomic ratio of magnesium to said transition metal is between 1 and 25.

3. A process according to claim 2, the species Y being a halo-hydride, characterized in that Y is formed by thermal decomposition at a temperature between 170° and 220°C of an organomagnesium halide in which $R_1$ is an aliphatic radical.

4. A process according to claim 2, the species Y being a mono-halide, characterized in that Y is formed by thermal decomposition at a temperature higher than 300°C, of an organomagnesium halide in which $R_1$ is an aliphatic radical.

5. A process according to claim 2, the species Y being a mono-halide, characterized in that Y is formed by thermal decomposition at a temperature higher than 300°C, of an organomagnesium halide in which $R_1$ is an aromatic radical.

6. A catalytic system comprising a catalyst according to claim 1 and further comprising an activator selected from hydrides and organometallic compounds of metals of groups I to III of the

Periodic Table, wherein the atomic ratio of the metal of said activator to the transition metal of the catalyst is between 0.1 and 100.

7. A catalytic system according to claim 13 wherein the activator is selected from trialkylaluminums and alkylsiloxalanes.

8. A process for polymerizing ethylene or copolymerizing ethylene with $\alpha$-olefins having from 3 to 8 carbon atoms at a temperature of 20° to 350°C and under a pressure of 1 to 2,500 bars, characterized in that said polymerization of copolymerization is effected in the presence of a catalytic system according to claim 6.

9. A process according to claim 8, characterized in that said polymerization or copolymerization is effected at a temperature of 20° to 200°C and under a pressure of 1 to 200 bars, in solution or in suspension in an inert liquid hydrocarbon having at least 6 carbon atoms.

10. A process according to claim 8, characterized in that said polymerization of copolymerization is effected at a temperature of 180° to 350°C and under a pressure of 400 to 2,500 bars, the mean residence time of the catalytic system in the polymerization reactor being between 2 and 100 seconds.